(19) Europäisches Patentamt / European Patent Office / Office européen des brevets

(11) **EP 4 316 727 A1**

(12) **EUROPEAN PATENT APPLICATION**

(43) Date of publication:
07.02.2024 Bulletin 2024/06

(21) Application number: 22189097.3

(22) Date of filing: 05.08.2022

(51) International Patent Classification (IPC):
*B23K 35/02* (2006.01)    *B23K 35/30* (2006.01)
*B23K 35/40* (2006.01)    *C22C 38/02* (2006.01)
*C22C 38/26* (2006.01)    *C22C 38/38* (2006.01)
*B23K 9/23* (2006.01)    *B23K 35/00* (2006.01)

(52) Cooperative Patent Classification (CPC):
**B23K 35/406; B23K 9/167; B23K 9/173;
B23K 9/232; B23K 10/027; B23K 26/0006;
B23K 26/211; B23K 26/32; B23K 35/004;
B23K 35/0261; B23K 35/0266; B23K 35/3073;
B23K 35/404; C22C 38/02; C22C 38/26;**    (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Outokumpu Oyj**
**00180 Helsinki (FI)**

(72) Inventor: **Lindner, Stefan**
**47877 Willich (DE)**

(54) **FILLER METAL FOR WELDING OF DISSIMILAR WELDS**

(57)    The present invention relates to a filler metal for joint welding of dissimilar welds of fully austenitic stainless steels in combination with low and unalloyed steels. The invention relates to solid wire electrodes as well as flux cored wires whereby the wire has a free corrosion potential (fcp) at room temperature between both dissimilar base materials to enable multi-material-design without contact corrosion problems.

**FIG. 1**

EP 4 316 727 A1

**(Cont. next page)**

(52) Cooperative Patent Classification (CPC): (Cont.)
**C22C 38/38;** B23K 2103/04; B23K 2103/05;
B23K 2103/18

**Description**

FIELD OF THE INVENTION

The present invention relates to a filler metal for a welded joint between a fully austenitic stainless steel having a TWIP hardening effect first material and a dissimilar low-alloyed or unalloyed steel second material. Further, the present invention relates to a joint weld between a fully austenitic stainless steel having a TWIP hardening effect first material and a dissimilar low-alloyed or unalloyed steel second material comprising a filler metal positioned between the first material and the second material. The present invention further relates to a use of a filler metal in a welding process. Still further the present invention relates to a method of welding dissimilar material. Additionally, the present invention relates to uses of a joint weld.

BACKGROUND

Manufacturers for the transport sector, especially the automotive industry with their car bodies, has a strong focus on lightweight concepts to decrease the vehicle weight and therefore to reduce $CO_2$-emissions and fuel consumption but also to improve the driving dynamic or the driving convenience. Thereby one strategy for lightweight construction is lightweight material design. It describes the material replacement inside one component by another material with a higher lightweight potential, whereby costs and processing topics should be considered. But also other lightweight construction strategies like conceptual lightweight, conditional lightweight design, form lightweight design or structure lightweight design can be influenced by the right material whereby "right" means here to enable the required component properties because of the chosen material which is also cost-efficient, worldwide available and integrable into the automotive process chain. Therefore, new lightweight-enabling materials are one key-factor in transport system manufacturing. Beside the automotive industry, also other transport applications like buses, trucks, in general commercial vehicles but also railway and agriculture vehicles are driven by lightweight. Also transport concepts with alternative powertrains like fuel cells, electric mobility, gas-driven vehicles or the hybrid versions are closely linked to lightweight efforts.

One material group which offers mechanical-technological properties for increased lightweight in component status can be identified with the manganese-chromium alloyed austenitic stainless steels. The CH patent application 202283 describes a range for such a manganese-chromium alloyed steel. Further examples can be given wih the EP patent application 1087029A2, the DE patent application 4242757C1, the WO patent application 2013107730 A1 or the WO patent application 0224969A1. Moreover, the WO patent application 2006027091A1 desribes the benefit of using such a stainless steel group for components to absorb the impact energy during vehicle collision or for wear-resistant applications. Also a strength increase because of interstitially dissolved atoms of the elements carbon and nitrogen is carried out. Further, the WO patent application 2010102601 A1 mentioned the hardening effect of TWIP (Twinning Induced Plasticity) for such steels. Because of loading the material with plastic deformation, the microstructure exhibits an intensive twinning. As a result, this group of austenitic stainless steels with a TWIP hardening effect can be cold-rolled during material manufacturing to higher strength levels up to 2,000 MPa with a reduced elongation at the same time. But also during component manufacturing by forming or during life-time of the component because of an impact, collision or a crash, the material will harden and therefore increase the passenger safety significantly. Derived from this effect, a further ligthweight potential is possible. Particularly, the excellent combination of high yield and tensile strength combined with a high elongation (ductility) at the same time offers for the application field of car body manufacturing new design possibilities for cold forming operations and therefore cost-benefits, high cycle-times and lightweight.

One important aspect for establishing new materials into transport systems but also in many other application fields is the question of weldability, especially in dissimilar welding combinations with other materials. Such mixed constructions or so-called "Multi-material-design" is state of the art in transport systems. For the combination of a stainless steel with an un- or low alloyed carbon steel, the term "black-white combination" is used in welding. Beside joining methods working without a filler metal like the resistance welding, there exist other welding procedures where a filler metal is mandatorily necessary, e.g. gas-metal arc welding. But also for welding procedures where a filler metal is optional depending on the configuration of the weld like the laser beam welding, TIG or plasma welding, a filler metal can support the welding task, e.g. to bridge gaps.

The DE patent application 102009007470A1 describes for the material group of high-alloyed manganese steels a flux cored wire. The purpose of the referred patent application was material-depended to avoid hot-shortness, increase of hardness, pore formation and therefore in general to reduce susceptibility to cracking. As a sheating material for the flux cored wire, an unalloyed soft steel is used. Further, from the standard EN ISO 14700:2014-07 ("Welding consumables - Welding consumables for hard-facing") is a filler metal defined as "T Fe9", also known as "MEGAFIL® A 220 M". This filler metal was developed for welding hardfacings of wear-resistant applications like excavator shovels and is based with 0.6 % carbon (C), 0.6 % silicon (Si), 3.8 % chromium and 14.5 % manganese.

Current state of welding theory for stainless steels is linked to their corrosion resistance and therefore also to maintain the corrosion resistance inside the weld what results including combustion of weld material in higher alloyed, so called "over-alloyed" filler metals in relation to the base materials. Standard filler metals for austenitic stainless steels are 1.4370 (G 18 8 Mn, according DIN EN ISO 14343:2017-08) or 1.4316 (G 19 9 L Si) which can be also used for the group of manganese and chromium alloyed fully austenitic stainless steels with a TWIP hardening effect. These kind of filler metals are mainly alloyed with chromium and nickel plus manganese, e.g. the 1.4370 with 19.0 % chromium (Cr), 9,0 % nickel (Ni) and 7.0% managnese (Mn). Especially the element nickel increases the material costs and is further traded at the London Metal Exchange and therefore volatile in price what results in a disadvantage for calculating long-term series production run over 7 up to 20 years depending on the specific transprotation application.

Beside these disadvantage, the standardized filler metals for austenitic stainless steels in fact increase the corrosion resistance of the weld. For dissimilar welds with lower corrosion resistant low- and unalloyed steels or aluminum alloys, it results in a higher difference of the free corrosion potential (fcp) and therefore in a higher accelerated contact corrosion risk for the less noble material, in these cases the partner material of the higher alloyed austenitic stainless steel. The less noble material which functioned as an anode sustains corrosion induced removal rates which would not occur without the contact with the noble austenitic stainless steel. The corrosion velocity [$\mu$m/a] is increased by having an electrolyte between both base materials, e.g. moisture. Further, gaps which exist especially in car body engineering for lap joints, represent a potential field of accumulation of the electrolyte concentration and result therefore in a further accelerated corrosion removal rate of the less noble material. With the described mechanism, also passive materials like aluminum can be polarized and initiated with local corrosion phenomena like pitting or crevice corrosion. The effect is also called bimetallic corrosion and is a specific corrosion type of the galvanic corrosion. As a result, further corrosion protection actions like a complete isolating of both materials by bonding or body-cavity sealing are necessary but include an increasing of costs and manufacturing efforts. Otherwise, the component lifetime will be reduced and repair work will be increased.

State of the art, there exist no correlated and similar filler metal for the material group of fully austenitic stainless steels, which are mainly alloyed with manganese and chromium and having a TWIP hardening effect. Current state of welding theory for stainless steels is linked to their corrosion resistance and therefore also to maintain the corrosion resistance inside the weld what results including combustion of weld material in higher, so called "over-alloyed" filler metals in relation to the base materials. According to this, a balanced filler metal for the mentioned material group for the task of dissimilar welds with lower corrosion resistant materials in the application field of transport systems do not exist.

Therefore, the object of the present invention is to eliminate some drawbacks of the prior art and to achieve a filler metal for joint welding of dissimilar welds of fully austenitic stainless steels having a TWIP-hardening effect in combination with low and unalloyed steels. The invention relates to solid wire electrodes as well as flux cored wires whereby the wire has a free corrosion potential (fcp) at room temperature between both dissimilar base materials to enable multi-material-design without contact corrosion problems.

## SUMMARY OF THE INVENTION

It is an aim of the present invention to provide a filler metal for joint welding of dissimilar welds of fully austenitic stainless steels in combination with low and unalloyed steels. The invention further relates to solid wire electrodes as well as flux cored wires whereby the wire has a free corrosion potential (fcp) at room temperature between both dissimilar base materials to enable multi-material-design without contact corrosion problems. Joint welds comprising the filler metal, uses of the filler metal, a method of welding using the filler metal and uses of joint welds comprising the filler metal are also disclosed.

The invention is defined by what is disclosed in the independent claims. Preferable embodiments are set out in the dependent claims.

## DETAILED DESCRIPTION

As mentioned above, the present invention relates to filler metal for a welded joint between a fully austenitic stainless steel having a TWIP-hardening effect first material and a dissimilar low-alloyed or unalloyed steel second material In an embodiment the filler metal consists of in weight % less than or equal to 0.08 % carbon (C), 0.3 - 0.6 % silicon (Si), 12.0 - 22.0 % manganese (Mn), more than or equal to 8.0 % but less than or equal to 18.5 % chromium (Cr), less than or equal to 2.0 % nickel (Ni), less than or equal to 2.0 % niobium (Nb) linked to the formula Nb = 4x(C), and further optionally less than or equal to 2.0 % molybdenum (Mo), less than or equal to 0.15% vanadium (V), less than or equal to 0.2 % aluminum (Al), the rest being iron and unavoidable impurities.

The effect of the elements alloying in the filler metal of the invention is described in the following:
Chromium creates a chromium oxide passivation layer on the surface of the steel object and achieves thus a fundamental corrosion resistance. In one embodiment the filler metal contains 12.5 - 16% chromium (Cr).

Beside chromium, manganese is the 2$^{nd}$ main alloying element and works as a strong austenite former, ensuring for the filler metal a stable austenitic microstructure and enabling the TWIP effect. It further reduces the use of the more volatile and more expensive element nickel. Manganese also increases the solubility of nitrogen in the later liquid weld pool. Therefore, the usage of a shielding gas during welding with an addition of 2 % ≤ nitrogen ≤ 10 % is suitable as the combination of Mn + N works as a strength and pitting corrosion resistance increasing effect. At the same time, manganese could not build hotcracking phases instead of nickel what result in a less risk for the weld. More than 22 % manganese starts working negatively as a higher content makes the decarburization process of the filler metal alloy more difficult, impairs the surface quality and reduces the corrosion resistance of the steel too much to enable the aspired free corrosion potential of the present invention. Finally, manganese as an austenite former is, in an embodiment, the main element to ensure the austenite stability of the microstructure and the necessary stacking fault energy of the filler metal to be fully austenitic and non-magnetizable.

Silicon inhibits the tendency for oxidation. The content of silicon is, limited to 0.3 - 0.6 % to avoid an unnecessary exposure for hot-cracks but also to bypass unwanted low-melting phases inside the resulting weld.

In an embodiment, molybdenum is optionally added to the filler metal of the invention especially for the usage of the welds inside particular corrosive components. Molybdenum together with chromium and nitrogen has an additional high resistance against pitting corrosion.

The addition of niobium into the chemical composition results in grain refinement and further niobium results in a segregation of fine carbides. Important for the weld is that niobium shows thus a high brittle fracture insensibility and impact resistance. Furthermore, niobium stabilizes the carbon content and thus niobium prevents the increase of $Cr_{23}C_6$ carbides and therefore the risk of intergranular corrosion. Moreover, niobium improves the resistance for stress corrosion. In addition to niobium, vanadium is alloyed having the content of less than 0.15 %. Vanadium increases the effect of grain refinement and makes the chemical composition of the invention more insensitive against overheating.

As described above the carbon content is limited to less than or equal to 0.08 % to reduce or avoid the risk for intergranular corrosion. In an embodiment the filler metal contains less than or equal to 0.03 % carbon (C), corresponding to low-carbon quality (LC) for filler metals.

In comparison to state-of-the-art standardized filler metals for austenitic stainless steels, nickel as a noble element is avoided as much as possible to reduce a volatile and cost-intensive factor but also to avoid hot-crack supporting phases and especially to reduce the free corrosion potential. Furthermore, preventing nickel reduces the danger on liquid metal embrittlement in combination with low melting phases coming from the less noble base material, e.g. the surface coating like zinc on the surface of unalloyed steels. Moreover, nickel can cause cancer and asthma coming from welding fume emissions because of combustion of filler metal during welding. Thus, in an embodiment, the amount of nickel is limited to 0.5 % or less.

In a further embodiment the filler metal has non-magnetizable properties and a stacking fault energy between 22 mJ/m$^2$ ≤ SFE ≤ 24 mJ/m$^2$. Austenite former manganese ensures the austenite stability of the microstructure and the necessary stacking fault energy of the filler metal to be fully austenitic and non-magnetizable. Stacking fault energy (SFE) is calculated with empirical models based on chemical composition of the material and the temperature. In embodiments of the present invention the equation 2.5 from the doctoral dissertation submitted in 2013 by Twardowski "Mikrostrukturelle Beschreibung von Verformung und Schädigung hoghmanganhaltiger Stähle mit TRIP - und TWIP-Effekt" from the faculty of Georesources and Material Engineering of the Rheinisch-Westfalische Technische Hochschule (RWTH) Aachen was used for the alloying system Fe-Mn-C:

$$\gamma_{SF} = 2\rho\Delta G^{\gamma\rightarrow\epsilon} + 2\sigma^{\gamma/\epsilon} \qquad (1)$$

where ρ = molar surface density along the slip lines {111},

σγ/ε = interfacial (surface) energy between austenite and epsilon-martensite, here following the mentioned approach that dependencies of temperature and content of manganese are considered
ΔGγ→ε = Change of free Gibbs energy during the change from austenite to martensite.

In one embodiment the filler metal is a fully austenitic material without delta-ferrite amounts in delivery condition. For the purposes of embodiments delivery condition means the condition of the filler metal before welding. In a further embodiment, in delivery condition, the filler metal is a solid wire electrode with a diameter d ≤ 4.0mm, more preferably between 0.8 mm ≤ d ≤ 1.2 mm In a still further embodiment the filler metal is, in delivery condition, a metal cored wire electrode or flux cored wire sheathed with a stainless steel alloy, said filler metal comprising at least one additive selected from the group consisting of MnO, $MnO_2$, $Mn_3O_4$, $Fe_2O_3$, $SiO_2$, $TiO_2$ or $ZrO_2$ in a total amount of less than or equal to 2.5 %.

The chemical composition of the present filler metal results during potentiostatic measurements in a free corrosion potential between -200 ≤ fcp ≤ -400 [mV/EH] depending on the exact chemical analysis of the filler metal. As an inspection solution a 0.5 % NaCl-solution was used what correspond to a ph-ratio of 7. The inspection time was defined with 24 h and the test was performed at room temperature. The measuring surface was 6 cm$^2$ whereby the measuring was executed against a silver (AG) / silver chloride (AgCI) electrode. That means that the filler metal reduces the difference of the free corrosion potential to the noble base material side (austenitic stainless steels) as well as to the less noble base material side (low- and unalloyed steels, aluminum alloys) below a critical potential difference of $\Delta U \leq$ 200 mV.

The described effect of a reduced potential difference also results in a significant lower infiltration on the less noble base material side of welded and then cathodic dip coated samples after a load in a corrosive medium. As a test standard, the alternating climate test according to VDA233-102 was carried out over ten cycles. The samples were prepared as butt-welds and after welding additionally injured with stone chipping and lattice cuts before the corrosion test starts. The infiltration level according to DIN EN ISO 4628-8 of the injured coating was significantly reduced to level 0 (none infiltration) on the less-noble base material side. Also the blistering level according to DIN EN ISO 4628-2 was able to evaluate with level "0" ("S0").

Independent from the reduced free corrosion potential of the filler metal of the present invention, the chromium content of the filler metal and therefore of the weld enables a corrosion protection even if the cathodic dip coating is locally damaged in the weld area. The surface ratio of protected to damaged area in combination with the chromium content is advantageous.

One preferred embodiment of the present invention is to realize, mainly due to the manganese content related to the content of the ferrite forming alloying elements, a fully austenitic filler metal material without delta-ferrite amounts in delivery condition and offering a TWIP (Twinning induced Plasticity) hardening mechanism. A filler metal with an austenitic microstructure has a face-centered cubic lattice (FCC). A twinning in the microstructure of a metal material is in general defined as two separate crystals that share some of the same crystal lattice. Thereby, twinning often goes along with accommodation plasticity via lattice dislocations. The austenite stability, therefore the non-magnetizable effect and the twinning effect are influenced by the stacking fault energy (SFE) in the unit millijoule per square meter. SFE is the energy that is needed to interrupt the regular stacking sequence of atoms within a crystal structure and thus cause a stacking fault like a two-dimensional lattice defect. To realize nonmagnetic effect without any delta-ferrite amounts, a SFE between 22 - 24 mJ/m$^2$ is preferred. Additionally, a SFE in this ratio also avoids the danger of hydrogen embrittlement as no martensite transformation is possible.

The wire can be used for gas-shielded metal-arc welding (GMAW), e.g. for subprocedures with a high rate of deposition like twin-wire GMAW or tandem GMAW. One advantage of the wire is that it can be further used especially for welding procedures where a filler metal is optionally like laser beam welding, TIG welding or plasma arc welding. The benefit in these cases is again to reduce the difference in the free corrosion potential of both base material sides and therefore to avoid contact corrosion also for such welding procedures.

The filler metal of the present invention was tested in welded conditions with respect to its mechanical-technological values after a static as well as a dynamic load. Table 1 represents the reached values from lap joints using GMAW with a MnCr-alloyed TWIP-hardening stainless steel as a base material with a thickness of t = 1.5 mm. The values are related to the cross-sectional area of the samples to avoid an influence of variations in sample thickness or width. Specified are the minimum, maximum and mean values of five samples per test.

Table 1.

| Values | Static load with tensile samples Rm [MPa] | Dynamic abrupt stress per weld area with tensile impact samples E [J/mm$^2$] | Location of fracture |
|---|---|---|---|
| Minimum | 245 | 1.95 | Base material + welding zone |
| Maximum | 415 | 3.90 | Base material |
| Mean value | 308 | 3.35 | Base material |

Preferably, the described filler metal of the present invention is used with a shielding gas offering a high inert gas ratio $\geq$ 90% like helium or more preferably argon. For GMAW CO$_2$ or O$_2$ are preferred as active gas ratios up to 10%. This corresponds to the main group M1 according to DIN EN ISO 14175. For TIG or plasma welding, the main group I (according DIN EN ISO 14175) can be used but also the subgroups R1 (up to 10% hydrogen), N2 and N4 (nitrogen and hydrogen up to 10%) works with the method of the present invention. To avoid loss of nitrogen and manganese, the weld should be as small as possible. Loss of nitrogen causes loss of strength and decreased pitting corrosion resistance. For this reason, an addition of $\geq$ 2 % nitrogen but not more than 10 % to the argon shielding gas minimizes nitrogen loss from the weld pool during TIG welding. A limitation does not have to be made in point of form of weld or type of joint. The filler metal can be used for semi-automatic welding or fully mechanized welding procedures but also manual welding is possible.

The filler metal of the present invention is preferably in form of a solid wire electrode with a diameter d ≤ 4.0mm. For the mentioned welding procedures and the requirements of the targeted application fields (gap conditions) the diameter should be preferably between 0.8 mm ≤ d ≤ 1.2 mm. The invention also relates to a filler metal manufactured as a metal cored wire electrode or flux cored wire. In this case additives like MnO, $MnO_2$, $Mn_3O_4$, $Fe_2O_3$, $SiO_2$, $TiO_2$ or $ZrO_2$ must be added separately or in combination less than or equal to 2.5 % to the metal powder inside a sheathing material. The addition of additives results in a higher level of purity inside the weld and therefore better mechanical technological values. For the filler metal of the present invention a stainless steel alloy is used as a flux cored wire sheathing material whereby seamless as well as form-closed flux cored wire are possible.

The filler metal of the present invention was especially designed and can be used with benefits for multi-material-designed ("black-white-combinations") dissimilar welds of austenitic stainless steels having a TWIP hardening effect in combination with less noble metallic materials like coated or uncoated un- and low alloyed steels or aluminum alloys for components or the dissimilar assembling of components manufactured with the mentioned base materials for transportation vehicles. Because of the graduated free corrosion potential from the austenitic stainless steel base material side, over the weld with the melted filler metal of the present invention inside, and the less-noble second base material side, it is a preferably embodiment of the present invention that the weld area is protected with a cataphoretic or cathodic dip coating. Therefore, the method of the present invention in combination with the mentioned dissimilar material combination is advantageous for any kind of vehicle components, especially for crash-relevant structural parts and chassis applications. These vehicles can be passenger cars but also commercial vehicles, buses, trucks, railways or agricultural vehicles, independent from the type of engine.

The filler metal can be also used for higher-alloyed stainless steels with other microstructures and hardening effects in the case that the wire reduces the difference of the free corrosion potential in a dissimilar weld with low- and unalloyed steels and other demands like an uniform coefficient of expansion are not required

Further embodiments relate to a joint weld. In one embodiment there is provided a joint weld between a fully austenitic stainless steel having a TWIP-hardening effect first material and a dissimilar low-alloyed or unalloyed steel second material comprising a filler metal of any of the embodiments described above. In an embodiment the filler metal is positioned between the first material and the second material. In one embodiment the filler metal has a free corrosion potential (fcp) at room temperature between both the first material and the dissimilar second material between -200 ≤ fcp ≤ -400 [mV/EH]. Free corrosion potential (fcp) is typically measured inside a thermo-stable measuring cell with a feed rate of 1 mV/s using a 1 mol solution of 0.f% NaCl at a pH of 7 and at room temperature. In a further embodiment the filler metal reduces the difference of the free corrosion potential between both the first material and the second material below a critical potential difference of ΔU ≤ 200 mV, more preferably ΔU ≤ 120 mV.

The joint weld according to embodiments results in dissimilar welds between the filler metal and the first material and the second material. In a further embodiment dissimilar welds with the filler metal have a static tensile load between 245 MPa ≤ Rm ≤ 415 MPa and a dynamic abrupt stress per weld area between 1.95 J/mm² ≤ E ≤ 3.9 J/mm². Dynamic abrupt stress is measured in a tensile impact test according to DIN53448 and the theoretical impact speed of the sledge is 5.235 m/s. The sledge of the pendulum machine represents a 300 Joule tool.

Further embodiments relate to the use of a filler metal in a welding process. In particular, in an embodiment relates to the use of the filler metal of any of the above described embodiments in a welding process. In an embodiment the welding process is selected from the group consisting of the following table 2.

Table 2.

| Welding procedure | Letter symbol according to Din ISO 857 | Identification number according to DIN EN ISO 4063 |
|---|---|---|
| Gas-shielded metal-arc welding (GMAW) | MAG | 135 |
| Gas-shielded metal-arc welding (GMAW) with cored wire electrode | MAG | 136 |
| Tungsten inert gas welding (TIG) | WIG | 141 |
| Plasma welding | WP | 15 |
| Laser beam welding | LA | 52 |
| Elektronenstrahlschweißen | EB | 51 |

Further embodiments relate to a method of welding dissimilar materials. In an embodiment the method comprises the step of forming a joint weld between dissimilar materials, said joint weld comprising a filler metal according to any of the above-described embodiments.

Joint welds according to embodiments of the present invention are suitable for use in a variety of functions.

In one embodiment the joint weld of any of the above-described embodiments is used in multi-material dissimilar-welded parts of vehicles. In a particular embodiment the joint weld is used in crash-relevant structural parts and chassis components of a vehicle having a combustion engine or an alternative power train, the vehicle being selected from the group consisting of bus, truck, commercial vehicle, railway vehicle, agricultural vehicle, and passenger car. In a further embodiment the joint weld is used in multi-material dissimilar-welded parts of protective elements like guard plates.

Also for some specific similar welds where a fully austenitic stainless steel having a TWIP-hardening effect is used as a base material, the filler metal of the present invention can be used to maintain also in the weld the same microstructure conditions. This can be suitable for protective elements like guard plates or to maintain non-magnetizable properties of welded components inside electric engines. Thus, in one embodiment the joint weld is used in similar welded parts using fully austenitic stainless steels as non-magnetizable base materials for electric engines.

BRIEF DESCRIPTION OF THE DRAWINGS

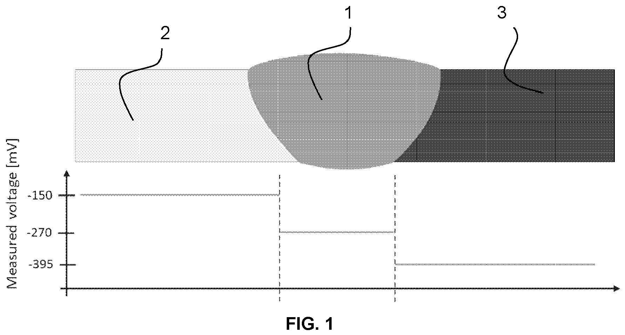

The present invention is illustrated in more details referring to the following drawing where
Fig. 1 shows one preferred embodiment of the invention schematically seen from the side view.

EMBODIMENTS ILLUSTRATING THE INVENTION

Fig. 1 illustrates the filler metal of the present invention (1) inside a butt-weld configuration with a V-weld form of a fully austenitic stainless steel with TWIP hardening effect representing the noble base material side (2), and a metallic material with a significant lower free corrosion potential like aluminum alloys or un- and low alloyed surface-coated steels, representing the less noble base material side (3). Below the weld seam, the differences in the free corrosion potential are illustrated showing that the filler metal reduces significantly the differences to both base material sides.

## Claims

1. A filler metal for a welded joint between a fully austenitic stainless steel having a TWIP-hardening effect first material and a dissimilar low-alloyed or unalloyed steel second material **characterized in that** the filler metal consists of in weight % less than or equal to 0.08 % carbon (C), 0.3 - 0.6 % silicon (Si), 12.0 - 22.0 % manganese (Mn), more than or equal to 8.0 % but less than or equal to 18.5 % chromium (Cr), less than or equal to 2.0 % nickel (Ni), less than or equal to 2.0 % niobium (Nb) linked to the formula Nb = 4x(C), and further optionally less than or equal to 2.0 % molybdenum (Mo), less than or equal to 0.15% vanadium (V), less than or equal to 0.2 % aluminum (Al), the rest being iron and unavoidable impurities.

2. . The filler metal according to claim 1, **characterized in that** the filler metal contains 12.5 - 16.0 % chromium (Cr).

3. . The filler metal according to claim 1 or 2, **characterized in that** the filler metal contains less than or equal to 0.03 % carbon (C).

4. . The filler metal according to any of the preceding claims, **characterized in** having non-magnetizable properties and a stacking fault energy between $22 \text{ mJ/m}^2 \leq \text{SFE} \leq 24 \text{ mJ/m}^2$.

5. . The filler metal according to any of the preceding claims, **characterized in** being a fully austenitic material without delta-ferrite amounts in delivery condition.

6. . The filler metal according to any of the preceding claims, **characterized in** being a solid wire electrode with a diameter $d \leq 4.0 \text{mm}$, more preferably between $0.8 \text{ mm} \leq d \leq 1.2 \text{ mm}$.

7. . The filler metal according to any of the preceding claims, **characterized in** being a metal cored wire electrode or flux cored wire sheathed with a stainless steel alloy, said filler metal comprising at least one additive selected from the group consisting of $MnO$, $MnO_2$, $Mn_3O_4$, $Fe_2O_3$, $SiO_2$, $TiO_2$ or $ZrO_2$ in a total amount of less than or equal to 2.5 %.

8. . A joint weld between a fully austenitic stainless steel having a TWIP-hardening effect first material and a dissimilar low-alloyed or unalloyed steel second material comprising a filler metal according to any of claims 1 to 7 positioned between the first material and the second material, **characterized in that** the filler metal has a free corrosion potential (fcp) at room temperature between both the first material and the dissimilar second material between $-200 \leq fcp \leq -400$ [mV/EH].

9. . The joint weld according to claim 8, **characterized in that** the filler metal reduces the difference of the free corrosion potential between both the first material and the second material below a critical potential difference of $\Delta U \leq 200$ mV, more preferably $\Delta U \leq 120$ mV.

10. . The joint weld according to claim 8 or 9, **characterized in that** dissimilar welds with the filler metal have a static tensile load between $245$ MPa $\leq Rm \leq 415$ MPa and a dynamic abrupt stress per weld area between $1.95$ J/mm$^2$ $\leq E \leq 3.9$ J/mm$^2$.

11. . Use of the filler metal according to any of the claims 1 to 7 in a welding process.

12. . A method of welding dissimilar materials comprising the step of forming a joint weld between the dissimilar materials, said joint weld comprising a filler metal according to any of claims 1 to 7.

13. . Use of the joint weld according to any of claims 8 to 10 in multi-material dissimilar-welded parts of vehicles, especially for crash-relevant structural parts and chassis components, for buses, trucks, commercial vehicles, railways, agricultural vehicles and passenger cars with combustion but also with alternative powertrains.

14. . Use of the joint weld according to any of claims 8 to 10 in multi-material dissimilar-welded parts of protective elements like guard plates.

15. . Use of the joint weld according any of claims 8 to 10 in similar welded parts using fully austenitic stainless steels as non-magnetizable base materials for electric engines.

FIG. 1

Europäisches
Patentamt

European
Patent Office

Office européen
des brevets

## EUROPEAN SEARCH REPORT

Application Number

EP 22 18 9097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S57 154394 A (TOKYO SHIBAURA ELECTRIC CO) 24 September 1982 (1982-09-24) | 1-3 | INV. B23K35/02 |
| A | * abstract * * claim 1; example 14; table 1 * | 4-15 | B23K35/30 B23K35/40 C22C38/02 |
| A | US 2017/312862 A1 (WASSON ANDREW J [US] ET AL) 2 November 2017 (2017-11-02) * the whole document * | 1-15 | C22C38/26 C22C38/38 B23K9/23 B23K35/00 |
| A | US 5 628 449 A (ONUMA TSUTOMU [JP] ET AL) 13 May 1997 (1997-05-13) * the whole document * | 1-15 | |

TECHNICAL FIELDS
SEARCHED      (IPC)

B23K
C22C

The present search report has been drawn up for all claims

| Place of search | Date of completion of the search | Examiner |
|---|---|---|
| The Hague | 12 December 2022 | Martinavicius, A |

EPO FORM 1503 03.82 (P04C01)

## ANNEX TO THE EUROPEAN SEARCH REPORT
## ON EUROPEAN PATENT APPLICATION NO.

EP 22 18 9097

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2022

| Patent document cited in search report | | Publication date | Patent family member(s) | | Publication date |
|---|---|---|---|---|---|
| JP S57154394 | A | 24-09-1982 | JP | H0120959 B2 | 19-04-1989 |
| | | | JP | S57154394 A | 24-09-1982 |
| US 2017312862 | A1 | 02-11-2017 | AR | 108268 A1 | 01-08-2018 |
| | | | AU | 2017259782 A1 | 25-10-2018 |
| | | | BR | 112018071994 A2 | 12-02-2019 |
| | | | CA | 3022940 A1 | 09-11-2017 |
| | | | CN | 109070283 A | 21-12-2018 |
| | | | EP | 3452248 A1 | 13-03-2019 |
| | | | JP | 6976273 B2 | 08-12-2021 |
| | | | JP | 2019519675 A | 11-07-2019 |
| | | | KR | 20180132959 A | 12-12-2018 |
| | | | RU | 2018141297 A | 03-06-2020 |
| | | | US | 2017312862 A1 | 02-11-2017 |
| | | | WO | 2017192621 A1 | 09-11-2017 |
| US 5628449 | A | 13-05-1997 | CN | 1120478 A | 17-04-1996 |
| | | | JP | 3031169 B2 | 10-04-2000 |
| | | | JP | H081360 A | 09-01-1996 |
| | | | KR | 960000392 A | 25-01-1996 |
| | | | TW | 290487 B | 11-11-1996 |
| | | | US | 5628449 A | 13-05-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CH 202283
- EP 1087029 A2
- DE 4242757 C1
- WO 2013107730 A1
- WO 0224969 A1
- WO 2006027091 A1
- WO 2010102601 A1
- DE 102009007470 A1